# EUROPÄISCHE PATENTSCHRIFT

(11) **EP 2 168 083 B1**
(45) Veröffentlichungstag und Bekanntmachung des Hinweises auf die Patenterteilung: **06.04.2011**
(21) Anmeldenummer: 08774613.7
(22) Anmeldetag: 02.07.2008
(51) Int. Cl.: G06K 19/077

(54) **VORRICHTUNG ZUR BERÜHRUNGSLOSEN DATENÜBERTRAGUNG VON EINEM OBJEKT AN EINE ABFRAGEEINRICHTUNG**
APPARATUS FOR CONTACTLESSLY TRANSMITTING DATA FROM AN OBJECT TO AN INTERROGATION DEVICE
DISPOSITIF DE TRANSMISSION DE DONNÉES SANS CONTACT D'UN OBJET VERS UN DISPOSITIF D'INTERROGATION

(30) Priorität: 12.07.2007 DE 202007009845 U
(43) Veröffentlichungstag der Anmeldung: 31.03.2010
(73) Patentinhaber: Gutehoffnungshütte Radsatz GmbH, 46145 Oberhausen (DE)
(72) Erfinder: WALTER, Michael J., 46562 Voerde (DE); KRAUTWALD, Stefan, 45468 Mülheim a. d. Ruhr (DE)
(74) Vertreter: Patentanwälte Dr. Solf & Zapf
(86) Internationale Anmeldenummer: PCT/EP2008/058471
(87) Internationale Veröffentlichungsnummer: WO 2009/007279

(56) Entgegenhaltungen:
- EP-A- 1 594 082
- EP-A- 1 701 298
- DE-A1-102004 027 978
- GB-A- 2 398 454
- US-A1- 2004 056 769
- US-B1- 6 371 380

## Beschreibung

Die vorliegende Erfindung betrifft eine Vorrichtung zur berührungslosen Datenübertragung von einem Objekt an eine Abfrageeinrichtung, mit einem Transponder sowie mit einem Befestigungselement zur Befestigung des Transponders an dem Objekt, von dem und/oder an das die Daten übertragen werden, gemäß dem Oberbegriff des Anspruchs 1.

Es besteht heute vielfach die Notwendigkeit, produzierte Güter - teilweise schon während ihrer Produktionsphase - eindeutig zu identifizieren. Ein Grund dafür ist die immer stärker ausgeweitete Zertifizierung von Firmen, z. B. gemäß der Norm ISO 9000 und ähnlichen Regelungen. Für diese Produktidentifikation werden derzeit verschiedene Methoden eingesetzt, wobei diese Methoden an die unterschiedlichen Randbedingungen der entsprechenden zu identifizierenden Produkte und -gruppen bzw. die jeweiligen Anwendungsgebiete angepasst sind. Einige Verfahren, deren Einsatz für das eine oder andere Produkt sinnvoll erscheint, können sich dabei auf einem anderen Anwendungsgebiet als nicht realisierbar oder im Falle der Notwendigkeit der Identifikation lebender Organismen als medizinisch nicht wünschenswert oder bedenklich erweisen.

So ist bei Produkten, die bereits verpackt sind, der Einsatz von ein- bzw. zweidimensionalen Barcodes auf der Verpackung möglich, ebenso bei Produkten, die optisch abgetastet (gescannt) werden können. Hier treten Schwierigkeiten auf, wenn der Barcode nicht direkt sichtbar ist, z. B. bei Stapeln von Kartons auf einer Palette: Zwar kann die Palette eindeutig identifiziert werden, aber alle einzelnen Kartons nicht mehr, sofern sie durch andere Kartons verdeckt werden.

Eine weitere Methode ist eine Identifikation durch eine Stanzung. Hierbei kann das Aufbringen einer Produktidentifikationsnummer die Oberfläche des Produkts verletzen, was zum Teil unerwünscht oder auch gesetzlich untersagt sein kann. So kann beispielsweise bei Lebensmittelverpackungen eine Stanzung die Haltbarkeit des Produkts deutlich herabsetzen. Auch z. B. bei sicherheitsrelevanten Bauteilen kann eine Stanzung das Oberflächengefüge verändern und damit die Belastbarkeit bzw. die Lebensdauer herabsetzen.

Vorrichtungen der eingangs genannten Art kommen an Objekten zum Einsatz, die mittels der sogenannten Radiofrequenz-Identifizierung (RFID) gekennzeichnet werden. Die RFID-Technologie besitzt grundsätzliche Vorteile gegenüber den vorstehend genannten Methoden der Produktidentifizierung. Da die Produktdaten berührungslos mittels elektrischer oder magnetischer Felder übertragen werden, bedarf es keiner direkten Sichtverbindung während des Lesevorganges. In Luft bzw. auf unmetallischen Substraten lassen sich Leseentfernungen bis zu vielen Metern realisieren. Die Oberfläche des Produktes wird dabei vorteilhafterweise nicht mechanisch verletzt.

Unter einem Transponder, wie er bei der RFID eingesetzt wird, versteht man ein in der Regel drahtlos arbeitendes Kommunikations-, Anzeige- und/oder Kontrollgerät, das eingehende Signale aufnimmt und auch automatisch wieder beantwortet. Der Begriff Transponder ist dabei aus den Begriffen Transmitter und Responder zusammengesetzt. Man unterscheidet passive Transponder, die ihre Sendeenergie dem elektrischen oder magnetischen Wechselfeld des Lesegerätes entnehmen und daher keine eigene Energiequelle aufweisen, und aktive Transponder mit eigener Energiequelle, die - bei einer weithin üblichen Verwendung einer Batterie - abhängig von der Häufigkeit des Gebrauchs und der Sendeleistung des Transponders eine Lebensdauer von 5 bis 10 Jahren erreichen kann. Transponder sind heute in allen Größenordnungen zu erhalten. Ihre Speicherkapazität reicht von einem Bit bis zu vielen Kilobyte.

Ein großer Nachteil der Transpondertechnologie besteht allerdings in der Störungsempfindlichkeit von Transpondern in der Nähe eines metallischen Untergrunds. Ein solcher Untergrund kann die mögliche Leseentfernung bis auf wenige Millimeter reduzieren, so dass es teilweise sogar vorkommt, dass sich in der Nähe von metallischen Körpern befindliche Transponder überhaupt nicht mehr auslesen lassen. Transponder zur Befestigung auf Metall sind derzeit in Hartkunststoffgehäusen eingegossen, die wiederum mittels Schrauben oder Klebung aufgebracht werden müssen.

Zur Befestigung von Transpondern sind verschiedene Methoden üblich. Für Glasflakons und andere glatte Produktoberflächen werden oft Klebstoffe eingesetzt, um die Produkte mit einem Transponder auszurüsten. Dabei muss sichergestellt werden, dass der eingesetzte Klebstoff nicht zur chemischen Beschädigung der Produktoberfläche führt. Da dennoch nicht in jedem Falle ein Klebstoff verwendet werden kann - z. B. beim Aufbringen eines Transponders auf die menschliche Haut ist dies sicher nicht erwünscht - muss hier eine alternative Befestigungsform gefunden werden. Ähnliches gilt allgemein, wenn Lebewesen mit Transpondern ausgestattet werden sollen, z. B. Haus- oder Nutztiere. Klebungen haben - insbesondere in diesem Fall - den Nachteil, dass sie sich als zu stabil oder zu ineffektiv erweisen können, insofern sich ein als störend empfundener Transponder unter Umständen nicht mehr in gewünschter Weise entfernen lässt. Andererseits darf sich eine Klebeverbindung auch nicht vor der Übergabe des Produkts an den Endkunden lösen. Bei Transpondern, die - wie oben erwähnt - in Hartkunststoffgehäuse eingegossen sind, entsteht hinsichtlich des Klebens das Problem, dass sich die Gehäuse nicht einer gerundeten Untergrundfläche anpassen können, so dass die Klebefläche relativ klein und damit instabil ist.

Bei Textilien wird als Befestigungsmethode bekanntermaßen auch ein Einnähen von Transpondern - z. B. in Taschen - praktiziert. Allerdings müssen die Transponder zur Sicherung ihrer Funktionsfähigkeit vor einer Wäsche aus dem Kleidungsstück entfernt werden. Ein erneutes Ausrüsten der Textilie ist dann nur durch ein wiederholtes Einnähen des Transponders möglich, was mit einem erhöhten Arbeitsaufwand verbunden ist. Dies ist möglicherweise ein Grund dafür, dass sich ein Einnähen von Transpondern ausschließlich bei Textilien für den privaten Gebrauch durchgesetzt hat, wo ein wiederholtes Anbringen der Transponder nicht gewünscht ist.

Bei Tieren haben sich zwei Methoden durchgesetzt: Bei Nutztieren werden die Transponder mittels Nieten am Ohr befestigt, bei Haustieren wird eher ein mit einem Transponder versehener Glaszylinder unter der Haut implantiert. Auch hier ist nur unter großem Aufwand der Transponder zu entfernen bzw. zu ersetzen, wobei beides im Allgemeinen nicht erwünscht ist.

Im Bereich der Befestigung von Transpondern am Menschen oder an Gegenständen von hohem Wert, die nicht beschädigt werden sollen, hat sich auch der Gebrauch von Bändern durchgesetzt, an denen die Transponder befestigt werden. So ist in öffentlichen Schwimmbädern die Verwendung von textilen Bändern mit angehängten Transpondern üblich. Die Bänder werden nach Gebrauch schadlos entfernt und sind daher vielfach verwendbar. Derzeit gebräuchliche Bänder zur Transponderbefestigung sind textile Gewebe. Sie sind zwar stabil und passen sich dem Untergrund an, an dem der Transponder befestigt werden soll, bieten aber keinen ausreichenden Schutz gegenüber einer Beschädigung des Transponders. Ein hoher Schutzgrad der Transponder vor mechanischen Verletzungen ist aber auch deshalb nicht vorgesehen, weil der menschliche Träger des Transponders schon zum Wohl der eigenen Person darauf achtet, sich und damit den Transponder zu schützen. Vergleichbares gilt auch für mit Transpondern ausgerüstete Wertgegenstände. Hier wäre ein Schaden am Gegenstand teurer, als die Zerstörung des Transponders, auf den sich der Schutz des Gegenstandes durch eine vorsichtige Handhabung somit automatisch ausdehnt.

Das deutsche Gebrauchsmuster DE 202 09 915 U1 beschreibt eine Vorrichtung ähnlich der der eingangs genannten Art. Es handelt sich dabei um eine Vorrichtung zur Datenübertragung von einem Schienenfahrzeug an eine Abfrageeinrichtung im Nahbereich derselben mittels passiver Transponder sowie Elementen zur Befestigung von Transpondern an im Wesentlichen zylindrischen Bauteilen, bei der vorgesehen ist, dass der Transponder und das Befestigungselement mittels einer Kunststoffvergussmasse oder einer Kunststoffschrumpfmasse formschlüssig miteinander verbunden sind und das so geschaffene Komposit kraftschlüssig an einer frei wählbaren Stelle einer Achse des Schienenfahrzeuges angebracht ist.

Im Konkreten besteht die bekannte Vorrichtung aus einem an sich bekannten, handelsüblichen passiven Transponder, der mittels eines beidseitig wirksamen Klebebandes auf ein versteifend wirkendes Zwischenelement aufgebracht ist. Dieses biegesteife, insbesondere aus Polyamid bestehende Zwischenelement ist bezüglich seiner Grundfläche den Abmessungen des Transponders angepasst. Transponder mit Zwischenelement sowie ein als Befestigungselement dienender handelsüblicher sogenannter Kabelbinder werden in ihrer relativen Sollposition zueinander durch Verkleben fixiert und in einen aus einem Elastomer oder aus einem Polyolefin-Compound bestehenden Schrumpfschlauch vorbestimmter Geometrie eingeführt. In einer Minimalausführung muss dabei zumindest der Kontaktbereich des Transponders und des versteifenden Zwischenelementes zusammen mit dem Befestigungselement durch den Schrumpfschlauch abgedeckt werden. Befestigungselement, Zwischenelement und Transponder werden mittels Heissluft zu einem untrennbaren Komposit verbunden. Alternativ zum Einsatz eines Schrumpfschlauches wird auch ein Vergießen mit Epoxid- und/oder Polyurethanharz oder mit ähnlichen Kunststoffen beschrieben, was beispielsweise durch Eintauchen in ein Kunststoff-Heissbad erfolgen kann. Sofern - wie bei dieser bekannten technischen Lösung - Kabelbinder zur Befestigung von Transpondern verwendet werden, ist der Transponder - wie dies auch für den Einsatz von Bändern als Befestigungsmittel aufgezeigt wurde - ungeschützt oder bedarf einer zusätzlichen Schutzeinrichtung.

Die GB-A-2 398 454 und die US 2004/0056769 A1 beschreiben bekannte Vorrichtungen der eingangs genannten, gattungsgemäßen Art. Im ersten Dokument ist dabei insbesondere eine wasserfeste Umhüllung für ein RFID-Modul beschrieben, die ein Volumen von nicht mehr als etwa 2 cm³ und eine Masse von nicht mehr als 5 g aufweist und die mit Mitteln, wie einem Armband, ausgestattet ist, die es gestatten, die Vorrichtung am Handgelenk eines Benutzers zu tragen. Die RFID-Umhüllung ragt dabei insbesondere beidseitig in Querrlchtung vom Band ab. Die Vorrichtung gemäß dem zweiten Dokument umfasst ein mehrlagiges Band, in dem ein Transponder zwischen einem ersten Bandabschnitt und einem zweite Bandabschnitt verklebt ist. Zur Fertigung des Bandes muss sowohl über einen größeren Bereich eine Klebstoffschicht auf der Unterseite des ersten Bandabschnitts aufgetragen werden, die den ersten Bandabschnitt und den zweiten Bandabschnitt stoffschlüssig miteinander verbindet. Dadurch liegen über den Bereich mindestens drei Schichten im Band vor. Alternativ wird auch beschrieben, dass die Bandabschnitte auch thermisch aneinander gebunden werden können, jedoch ist dies aufwändiger, weil es den Einsatz erhöhter Temperaturen notwendig macht. Wie auf diese Weise eine erforderliche Dichtheit erreicht werden soll, ist nicht dargestellt.

Der vorliegenden Erfindung liegt die Aufgabe zugrunde, eine Vorrichtung der eingangs beschriebenen Art zu schaffen, die einerseits bei Möglichkeit einer einmaligen oder vielfachen Benutzbarkeit einen hohen Schutzgrad des Transponders gewährleisten kann, die gekennzeichneten Güter schont und bei hinreichend großer Leseentfernung ein direktes Aufbringen des Transpondersystems auf Metall ermöglicht, und die andererseits mit verringertem Aufwand herstellbar ist.

Erfindungsgemäß wird dies dadurch erreicht, der Träger eine Aufnahmeöffnung aufweist, in die der Transponder eingelegt ist, und dass die Schutzschicht aus einem Kunststoffharz, wie einer Vergussmasse oder einem Lack, besteht.

Im Gegensatz zu Vorrichtungen, in denen Transponder an Bändern befestigt werden, ist erfindungsgemäß der Transponder vorteilhafterweise in das Band integriert, bildet also einen Bestandteil des Bandes bzw. eine strukturelle Einheit mit dem Band.

Durch das erfindungsgemäße Band kann einerseits eine hinreichend weiche Auflage auf der Produktseite und damit eine Schonung der gekennzeichneten Güter gewährleistet werden, andererseits weist der Transponder, dadurch, dass er flexibel mit dem Band gebogen und um ein zu kennzeichnendes Objekt gewunden werden kann, sowie z. B. auch dadurch, dass er nicht über die Bandkanten hervorsteht, einen erhöhten Schutzgrad auf.

Vorzugsweise kann das erfindungsgemäße Band dabei eine sandwichartige Struktur aufweisen und insbesondere aus einem Laminat mindestens eines folienartig ausgebildeten Transponders und einem Träger gebildet sein. Hierzu ist es für eine weitere Erhöhung des Schutzgrads auch mit Vorteil möglich, über dem Transponder in dem Laminat eine zusätzliche Schutzschicht vorzusehen, die einen stabilen Überzug bildet, der sowohl in chemischer, als auch in mechanischer Hinsicht den Transponder vor schädlichen Umwelteinflüssen bewahrt.

Des Weiteren ist mit Vorteil - bei Gewährleistung einer hinreichend großer Leseentfernung - ein direktes Aufbringen der erfindungsgemäßen Vorrichtung auch auf Metall möglich, indem für den Träger des Bandes eine Dicke eingestellt wird, die eine derartige Beabstandung des Transponders von dem metallischen Objekt gewährleistet, dass die Übertagung von Radiosignalen an und vom Transponder nicht gestört wird.

Weitere vorteilhafte Ausführungen der Erfindung sind in den Unteransprüchen und der nachfolgenden speziellen Beschreibung enthalten. Anhand eines Ausführungsbeispiels wird unter Bezugnahme auf die Zeichnung die Erfindung näher erläutert. Dabei zeigen:
- Fig. 1: eine schematisierte perspektivische Darstellung eines Ausschnitts aus einem quer und längs geschnittenen erfindungsgemäßen Band,
- Fig. 2: einen schematisierten Längsschnitt des Bandausschnitts in Fig. 1,
- Fig. 3: eine perspektivische Darstellung des erfindungsgemäßen Bandes in einer Ausführung mit einem mechanischen Verschluss.

In den verschiedenen Figuren der Zeichnung sind gleiche Teile stets auch mit den gleichen Bezugszeichen versehen, so dass sie in der Regel auch jeweils nur einmal beschrieben werden.

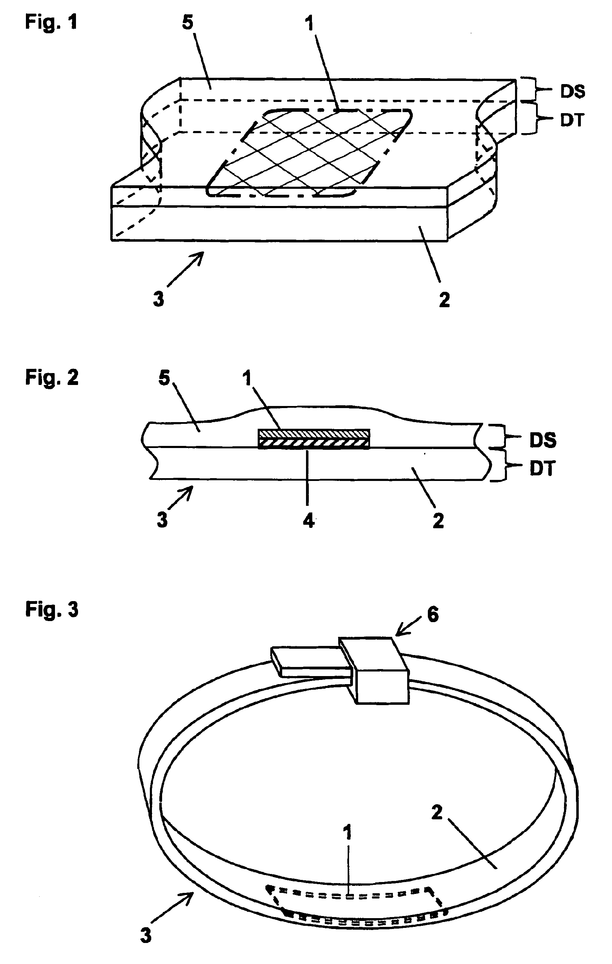

Fig. 1 und 2 zeigen einen Ausschnitt aus einer erfindungsgemäßen Vorrichtung zur berührungslosen Datenübertragung von einem Objekt an eine Abfrageeinrichtung. Das Objekt selbst und die Abfrageeinrichtung sind dabei nicht dargestellt. Die Vorrichtung umfasst mindestens einen Transponder 1 - ein RFID-Tag - und ein Befestigungselement 2 für den Transponder 1 an dem Objekt, von dem und/oder an das die Daten übertragen werden.

Erfindungsgemäß besteht die Vorrichtung aus einem geeignet hergestellten flexiblen Band 3, welches den oder die Transponder 1 komplett beinhaltet. Dazu weist das Band 3 insbesondere eine sandwichartige Struktur auf, die mindestens aus dem folienartig ausgebildeten Transponder 1 und einem Träger 2 besteht, welcher das Befestigungselement 2 bildet. Durch die Flexibilität des Bandes 3 ist es problemlos möglich, aus dem Band 3 eine Öse, Schlaufe, Schlinge oder einen Ring herzustellen, wie dies Fig. 3 veranschaulicht.

Der Träger 2 kann dabei aus einem textilen Material, wie aus einem Gewebe und/oder aus Kunststoff, beispielsweise auch in massiver Form, nach der Art eines Kabelbinders, bestehen.

Es kann auch vorgesehen sein, dass der Träger 2 - wie dargestellt - eine Aufnahmeöffnung 4 aufweist, in die der Transponder 1 einlegbar ist.

Der Träger 2 weist bevorzugt eine Mindestdicke DT auf, die eine derartige Beabstandung des Transponders 1 von einem metallischen Objekt gewährleistet, dass die Übertragung von Radiosignalen an den und von dem Transponder 1 nicht gestört ist. Diese Mindestdicke DT kann beispielsweise etwa 2 mm betragen. Dadurch wird erreicht, dass der Transponder 1 bei seiner Befestigung immer einen Abstand zum Untergrund besitzt, der seine volle Funktionsfähigkeit gewährleistet, auch dann, wenn die erfindungsgemäße Vorrichtung direkt auf Metall aufgebracht wird.

Über dem Transponder 1 ist in der bevorzugten dargestellten Ausführung der Erfindung eine Schutzschicht 5 ausgebildet. Dadurch ist der Transponder zur Außenseite hin durch einen Überzug gegen Beschädigungen geschützt, die chemische oder mechanische Ursachen haben können. Die Schutzschicht 5 kann eine Dicke DS im Bereich von 0,3 bis 3,0 mm, vorzugsweise von etwa 0,5 mm, aufweisen und sollte die Flexibilität des Bandes 3 nicht beeinträchtigen. Die Schutzschicht 5, durch deren Vorhandensein der Transponder 1 gekapselt in das Band 3 integriert ist, kann bevorzugt aus einem Kunststoffharz, wie einer Vergussmasse oder einem Lack, bestehen.

Ein optional vorhandener Verschluss 6, wie die in Fig. 3 dargestellte, an den Bandenden befindliche Schließe ermöglicht je nach ihrer konstruktiven Gestaltung ein ein- oder mehrmaliges Schließen des Bandes 3, um den Transponder 1 an beliebigen Gegenständen zu befestigen. Der Transponder 1 selbst ist - wie bereits erwähnt - so dünn ausgelegt, dass er sich problemlos an die Form eines Untergrundes mit gewölbter oder unregelmäßiger Oberflächengestalt anpassen kann.

Die Erfindung ist nicht auf das dargestellte Ausführungsbeispiel beschränkt, sondern umfasst auch alle im Sinne der Erfindung gleichwirkenden Ausführungen. So kann zur Verbesserung der Kompatibilität des erfindungsgemäßen Bandes 3 mit einem Metalluntergrund zusätzlich in das Band 3 eine Schirmfolie, ein sogenannter Spacer, integriert sein, die zwischen dem Transponder 1 und dem Träger 2 des Bandes 3 lokalisiert wird, ohne dass der Rahmen der Erfindung verlassen wird. Auch ist es mit Vorteil möglich, dass das Band 3 eine Klebeschicht, insbesondere eine selbstklebende Klebeschicht, zur Herstellung einer in der Montage einfachen Verbindung mit einem zu kennzeichnenden Objekt aufweist.

Die Verwendung des erfindungsgemäßen Bandes 3 beschränkt sich nicht auf die Befestigung von passiven Transpondern 1 - selbstverständlich einschließlich ihrer Antennen, welche vollständig in das Band 3 eingelassen sind - sondern umfasst auch aktive Transponder 1, insofern es möglich ist, diese mit einer flexiblen bzw. folienartigen Energiequelle auszurüsten, die sich in der gleichen Art wie ein passiver Transponder 1 in das Band 3 integrieren lässt. Im Hinblick auf die Herstellbarkeit des erfindungsgemäßen Bandes ist zu erwähnen, dass im Handel unter der Bezeichnung "Smart Label" beispielsweise Transponder erhältlich sind, die flächig und mit Dimensionen von 25 mm mal 100 mm ausgebildet sind und dabei die Stärke eines Blattes Papier aufweisen können.

Die erfindungsgemäße Vorrichtung kann mit Vorteil für alle Objekte eingesetzt werden, die eingangs erwähnt wurden, wie beispielsweise aus Karton, Glas, Metall, wobei sich der Einsatz vorteilhafterweise nicht auf unbelebte Objekte beschränkt, sondern auch lebende Organismen umfasst.

### Bezugszeichen

- 1: Transponder
- 2: Träger
- 3: Band
- 4: Aufnahmeöffnung für 1
- 5: Schutzschicht von 3
- 6: Verschluss

- DS: Dicke von 5
- DT: Dicke von 2

## Patentansprüche

1. Vorrichtung zur berührungslosen Datenübertragung von einem Objekt an eine Abfrageeinrichtung, mit einem Transponder (1) sowie mit einem Befestigungselement (2) zur Befestigung des Transponders (1) an dem Objekt, von dem und/oder an das die Daten übertragen werden, wobei der Transponder (1) und das Befestigungselement (2) ein flexibles Band (3) bilden, welches aus einem Laminat mindestens eines folienartig ausgebildeten Transponders (1), eines Trägers (2) und einer Schutzschicht (5) besteht, wobei der Träger (2) das Befestigungselement (2) bildet,
**dadurch gekennzeichnet, dass** der Träger (2) eine Aufnahmeöffnung (4) aufweist, in die der Transponder (1) eingelegt ist, und dass die Schutzschicht (5) aus einem Kunststoffharz, wie einer Vergussmasse oder einem Lack, besteht.

2. Vorrichtung nach Anspruch 1,
**dadurch gekennzeichnet, dass** das Band (3) eine sandwichartige Struktur aufweist.

3. Vorrichtung nach Anspruch 1 oder 2,
**dadurch gekennzeichnet, dass** der Träger (2) aus einem textilen Material besteht.

4. Vorrichtung nach einem der Ansprüche 1 bis 3,
**dadurch gekennzeichnet, dass** der Träger (2) aus Kunststoff besteht.

5. Vorrichtung nach einem der Ansprüche 1 bis 4,
**dadurch gekennzeichnet, dass** der Träger (2) eine Mindestdicke (DT) aufweist, die eine derartige Beabstandung des Transponders (1) von einem metallischen Objekt gewährleistet, dass die Übertragung von Radiosignalen an den und von dem Transponder (1) nicht gestört ist.

6. Vorrichtung nach einem der Ansprüche 1 bis 5,
**dadurch gekennzeichnet, dass** der Träger (2) eine Mindestdicke (DT) von mindestens 2 mm aufweist.

7. Vorrichtung nach einem der Ansprüche 1 bis 6,
**dadurch gekennzeichnet, dass** die Schutzschicht (5) eine Dicke (DS) im Bereich von 0,3 bis 3,0 mm, vorzugsweise von etwa 0,5 mm, aufweist.

8. Vorrichtung nach einem der Ansprüche 1 bis 7,
**dadurch gekennzeichnet, dass** das Band (3) eine Klebeschicht, insbesondere eine selbstklebende Klebeschicht, aufweist.

9. Vorrichtung nach einem der Ansprüche 1 bis 8,
**dadurch gekennzeichnet, dass** das Band (3), insbesondere an seinen Enden, einen mechanischen Verschluss (6) aufweist.

## Claims

1. Device for contactless data transmission from an object to an interrogation device, having a transponder (1) and a fastening element (2) for fastening the transponder (1) to the object from which and/or to which the data are transmitted, the transponder (1) and the fastening element (2) forming a flexible band (3) which is composed of a laminate of at least a transponder (1) of film-like form, a support (2) and a protective layer (5), the support (2) forming the fastening element (2), **characterised in that** the support (2) has a receiving opening (4) in which the transponder (1) is inserted, and **in that** the protective layer (5) is composed of a synthetic resin, such as a casting compound or a lacquer.

2. Device according to Claim 1,
**characterised in that** the band (3) has a sandwich-like structure.

3. Device according to Claim 1 or 2,
**characterised in that** the support (2) is composed of a textile material.

4. Device according to one of Claims 1 to 3,
**characterised in that** the support (2) is composed of plastic.

5. Device according to one of Claims 1 to 4,
**characterised in that** the support (2) has a minimum thickness (DT) which ensures such a spacing of the transponder (1) from a metallic object that the transmission of radio signals to and from the transponder (1) is not disturbed.

6. Device according to one of Claims 1 to 5,
**characterised in that** the support (2) has a minimum thickness (DT) of at least 2 mm.

7. Device according to one of Claims 1 to 6,
**characterised in that** the protective layer (5) has a thickness (DS) in the range from 0.3 to 3.0 mm, preferably of approximately 0.5 mm.

8. Device according to one of Claims 1 to 7,
**characterised in that** the band (3) has an adhesive layer, in particular a self-adhesive adhesive layer.

9. Device according to one of Claims 1 to 8,
**characterised in that** the band (3) has a mechanical closure (6), in particular at its ends.

## Revendications

1. Dispositif pour la transmission sans contact des données depuis un objet vers un dispositif d'interrogation, comportant un transpondeur (1), ainsi qu'un élément de fixation (2) pour fixer le transpondeur (1) sur l'objet, à partir duquel et/ou vers lequel doivent être transmises les données, le transpondeur (1) et l'élément de fixation (2) formant une bande (3) flexible, qui est réalisée dans un stratifié avec au moins un transpondeur (1) sous forme de feuille, un support (2) et une couche de protection (5), le support (2) étant l'élément de fixation (2),
**caractérisé en ce que** le support (2) comporte une ouverture formant logement (4), dans laquelle est inséré le transpondeur (1), et **en ce que** la couche de protection (5) est réalisée dans une résine synthétique, telle qu'une pâte de scellement ou un vernis.

2. Dispositif selon la revendication 1, **caractérisé en ce que** la bande (3) comporte une structure de type sandwich.

3. Dispositif selon la revendication 1 ou 2, **caractérisé en ce que** le support (2) est réalisé dans un matériau textile.

4. Dispositif selon l'une quelconque des revendications 1 à 3, **caractérisé en ce que** le support (2) est réalisé en matière plastique.

5. Dispositif selon l'une quelconque des revendications 1 à 4, **caractérisé en ce que** le support (2) a une épaisseur minimum (DT), par laquelle il est garanti que le transpondeur (1) et l'objet métallique sont situés l'un de l'autre à une distance telle que la transmission des signaux radio vers le transpondeur (1) ou à partir de celui-ci n'est pas gênée.

6. Dispositif selon l'une quelconque des revendications 1 à 5, **caractérisé en ce que** le support (2) a une épaisseur minimum (DT) de 2 mm au moins.

7. Dispositif selon l'une quelconque des revendications 1 à 6, **caractérisé en ce que** la couche de protection (5) a une épaisseur (DS) dans une plage de 0,3 à 3,0 mm, de préférence de 0,5 mm environ.

8. Dispositif selon l'une quelconque des revendications 1 à 7, **caractérisé en ce que** la bande (3) comporte une couche adhésive, en particulier une couche auto-adhésive.

9. Dispositif selon l'une quelconque des revendications 1 à 8, **caractérisé en ce que** la bande (3) comporte, en particulier au niveau de ses extrémités, une fermeture (6) mécanique.
